(19) Europäisches Patentamt / European Patent Office / Office européen des brevets

(11) **EP 4 576 788 A1**

(12) **DEMANDE DE BREVET EUROPEEN**

(43) Date de publication:
**25.06.2025 Bulletin 2025/26**

(21) Numéro de dépôt: **24221362.7**

(22) Date de dépôt: **19.12.2024**

(51) Classification Internationale des Brevets (IPC):
$H04N\ 21/242$ (2011.01)   $H04L\ 69/28$ (2022.01)
$H04N\ 21/43$ (2011.01)   $H04N\ 21/61$ (2011.01)
$H04N\ 21/8547$ (2011.01)   $H04L\ 47/283$ (2022.01)
$H04N\ 21/44$ (2011.01)   $H04N\ 21/462$ (2011.01)

(52) Classification Coopérative des Brevets (CPC):
**H04N 21/242; H04L 69/28; H04N 21/4305;**
**H04N 21/6125; H04N 21/8547;** H04L 47/283;
H04N 21/43072; H04N 21/44004; H04N 21/4622

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH MA MD TN**

(30) Priorité: **22.12.2023 FR 2315118**

(71) Demandeur: **AVIWEST**
**35760 Saint-Grégoire (FR)**

(72) Inventeurs:
• **OMNES, Yannick**
**35760 SAINT-GREGOIRE (FR)**
• **GEROUVILLE, Clément**
**35760 SAINT-GREGOIRE (FR)**
• **POULLAOUEC, Ronan**
**35760 SAINT-GREGOIRE (FR)**

(74) Mandataire: **Cabinet Le Guen Maillet**
**3, impasse de la Vigie**
**CS 71840**
**35418 Saint-Malo Cedex (FR)**

(54) **PROCEDE ET DISPOSITIF DE MISE A JOUR D'UNE HEURE DE SORTIE D AU MOINS UN PAQUET DE DONNEES D'UN FLUX AUDIOVISUEL**

(57)    La présente invention concerne un procédé et un dispositif de mise à jour d'une heure de sortie d'au moins un paquet de données d'un flux audiovisuel transféré d'un émetteur vers un récepteur par l'intermédiaire d'au moins un réseau de communication. Selon l'invention, l'émetteur :
- transfère (E500) un premier paquet de données et reçoit un second paquet de données comportant des marqueurs temporels,
- calcule (E503), à partir des marqueurs temporels, un temps de trajet moyen, une valeur moyenne pondérée et une déviation,
- vérifie (E507) si le temps de trajet moyen est supérieur à un seuil prédéterminé,
- prend (E508) en compte le temps de trajet moyen pour mettre à jour l'heure de sortie d'au moins un paquet de données du flux audiovisuel si au moins le temps de trajet moyen est inférieur ou égal au seuil prédéterminé.

Fig. 5

**Description**

DOMAINE TECHNIQUE

La présente invention concerne un procédé et un dispositif de mise à jour d'une heure de sortie d'au moins un paquet de données d'un flux audiovisuel.

ETAT DE LA TECHNIQUE ANTERIEURE

La transmission de paquets de données vidéo est soumise à des contraintes temporelles de manière à permettre une bonne reproduction de la vidéo au niveau du récepteur.

Ces contraintes temporelles sont soumises aux performances du réseau de communication reliant l'émetteur du flux vidéo et le récepteur.

Par exemple, les variations de la latence de transfert du flux vidéo, la désynchronisation des horloges de l'émetteur et du récepteur influent sur la qualité de la reproduction du flux vidéo. La gigue représente la différence de temps à l'arrivée, entre différents paquets partis en même temps. La gigue apparaît en cas de congestion du réseau, de dérive du timing ou de changement de routage.

La gigue est très variable dans le temps et est fortement dépendante du type de réseau de communication utilisé pour le transfert de paquets de données de l'émetteur vers le récepteur.

Ceci est particulièrement difficile à compenser lorsque plusieurs réseaux de communication sont utilisés simultanément pour transmettre le flux vidéo.

La reproduction de la vidéo au niveau du récepteur correspond à une reproduction au niveau du récepteur de la vidéo au même rythme qu'au niveau de l'émetteur. Cela permet d'éviter des sauts liés à un déphasage et également de respecter la latence sans une dérive temporelle de bout en bout. Dans les systèmes classiques, la phase entre l'émetteur et le récepteur est respectée mais pas la latence.

L'invention vise à proposer une solution qui permet de prendre en compte les variations des caractéristiques du ou des réseaux de communication utilisés pour la transmission du flux vidéo ainsi que de la désynchronisation des horloges de l'émetteur et du récepteur.

EXPOSE DE L'INVENTION

A cette fin, l'invention concerne un procédé de mise à jour d'une heure de sortie d'au moins un paquet de données d'un flux audiovisuel transféré d'un émetteur vers un récepteur par l'intermédiaire d'au moins un réseau de communication, caractérisé en ce que le procédé comporte les étapes effectuées par l'émetteur de :

- transfert d'un premier paquet de données comportant un premier marqueur temporel correspondant à l'instant d'émission du premier paquet,
- réception d'un second paquet de données comportant le premier marqueur temporel, un second marqueur temporel correspondant à l'heure de réception du premier paquet et un troisième marqueur temporel correspondant à l'instant d'émission du second paquet,
- mémorisation de l'heure de réception du second paquet,
- calcul, à partir des trois marqueurs temporels et de l'heure de réception du second paquet, d'un temps de trajet moyen,
- calcul d'une valeur moyenne pondérée et d'une déviation entre le temps de trajet courant et le temps de trajet moyen,
- vérification si le temps de trajet moyen est supérieur à un seuil prédéterminé, le seuil prédéterminé étant fonction de la valeur moyenne pondérée et de la déviation entre le temps de trajet courant et le temps de trajet moyen,
- prise en compte du temps de trajet moyen pour mettre à jour l'heure de sortie d'au moins un paquet de données du flux audiovisuel si au moins le temps de trajet moyen est inférieur ou égal au seuil prédéterminé,
- non prise en compte du temps de trajet moyen pour mettre à jour l'heure de sortie d'au moins un paquet de données du flux audiovisuel si le temps de trajet moyen est supérieur au seuil prédéterminé.

L'invention concerne aussi un dispositif de mise à jour d'une heure de sortie d'au moins un paquet de données d'un flux audiovisuel transféré d'un émetteur vers un récepteur par l'intermédiaire d'au moins un réseau de communication, caractérisé en ce que le dispositif est compris dans l'émetteur et comporte :

- des moyens de transfert d'un premier paquet de données comportant un premier marqueur temporel correspondant à l'instant d'émission du premier paquet,
- des moyens de réception d'un second paquet de données comportant le premier marqueur temporel, un second marqueur temporel correspondant à l'heure de réception du premier paquet et un troisième marqueur temporel correspondant à l'instant d'émission du second paquet,

- des moyens de mémorisation de l'heure de réception du second paquet,
- des moyens de calcul, à partir des trois marqueurs temporels et de l'heure de réception du second paquet, d'un temps de trajet moyen,
- des moyens de calcul d'une valeur moyenne pondérée et d'une déviation entre le temps de trajet courant et le temps de trajet moyen,
- des moyens de vérification si le temps de trajet moyen est supérieur à un seuil prédéterminé, le seuil prédéterminé étant fonction de la valeur moyenne pondérée et de la déviation entre le temps de trajet courant et le temps de trajet moyen,
- des moyens de prise en compte du temps de trajet moyen pour mettre à jour l'heure de sortie d'au moins un paquet de données du flux audiovisuel si au moins le temps de trajet moyen est inférieur ou égal au seuil prédéterminé,
- des moyens de non prise en compte du temps de trajet moyen pour mettre à jour l'heure de sortie d'au moins un paquet de données du flux audiovisuel si le temps de trajet moyen est supérieur au seuil prédéterminé.

Ainsi, la présente invention apporte une solution qui permet de prendre en compte les variations des caractéristiques du ou des réseaux de communication utilisés pour la transmission du flux vidéo ainsi que de la désynchronisation des horloges de l'émetteur et du récepteur. Le filtrage effectué rend le système résistant à l'augmentation des temps de transmission lié à une congestion réseau.

Selon un mode particulier, la prise en compte du temps de trajet moyen pour mettre à jour l'heure de sortie d'au moins un paquet de données du flux audiovisuel est en outre dépendante d'une comparaison de la déviation entre le temps de trajet courant et le temps de trajet moyen avec un temps minimum.

Ainsi, les augmentations de latences provoquées par un changement de condition réseau et non par de la congestion sont prises en compte et ne provoquent pas un blocage du système.

Selon un mode particulier, les paquets de données du flux audiovisuel sont transférés de l'émetteur vers le récepteur par l'intermédiaire d'une pluralité de réseaux de communication et le procédé est effectué pour chaque réseau de communication.

Ainsi, l'utilisation de plusieurs interfaces réseaux simultanément permet une mesure précise, par exemple de l'ordre de la milliseconde, de la différence entre les horloges de l'émetteur et du récepteur sans recourir à un point de référence comme par exemple un serveur NTP (acronyme du terme anglais Network Time Protocol).

Selon un mode particulier, si le temps de trajet moyen est supérieur au seuil prédéterminé, la mise à jour de l'heure de sortie du au moins un paquet est effectuée à partir du temps de trajet moyen d'un autre réseau de communication.

Ainsi, la présente invention permet de s'affranchir d'erreurs liées à un problème d'un des réseaux de communication.

Selon un mode particulier, les réseaux de communication sont des réseaux de type Ethernet, Wi-Fi, xDSL, KA-SAT, BGAN ou cellulaires.

Selon un mode particulier, la valeur moyenne pondérée et la déviation entre le temps de trajet courant et le temps de trajet moyen sont calculées à partir des formules suivantes : $rtt_{curr} = (e_r - e_e)$ où $e_e$ est le premier marqueur temporel et $e_r$ est l'heure de réception du second paquet,

$$rtt_{meancurr} = \frac{(\alpha_{quo} - \alpha_s) * rtt_{meanprec} + \alpha_s * rtt_{curr}}{\alpha_{quo}}$$

$$rtt_{dev} = \frac{(\alpha_{quo} - \alpha_d) rtt_{dev} + \alpha_d * (rtt_{curr} - rtt_{meancurr})}{\alpha_{quo}}$$

où $\alpha_{quo}$, $\alpha_s$ et $\alpha_d$ sont trois coefficients permettant de pondérer les valeurs utilisées, $rtt_{meancurr}$ est la moyenne calculée à l'instant présent, la variable $rtt_{meanprec}$ est la moyenne calculée à la précédente itération et $rtt_{curr}$ correspond à la valeur courante du temps de trajet.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un exemple d'un système de communication dans lequel la présente invention est implémentée ;

[Fig. 2] illustre schématiquement un exemple de répartition de paquets de données vidéo entre différents réseaux de communication reliant un émetteur et un récepteur ;

[Fig. 3] illustre un exemple de chronogramme d'envoi de paquets de maintien selon la présente invention ;

[Fig. 4] illustre un exemple d'architecture d'un émetteur selon un mode de réalisation ;

[Fig.5] illustre un exemple d'un procédé exécuté par un émetteur selon un mode de réalisation.

EXPOSE DETAILLE DE MODES DE REALISATION

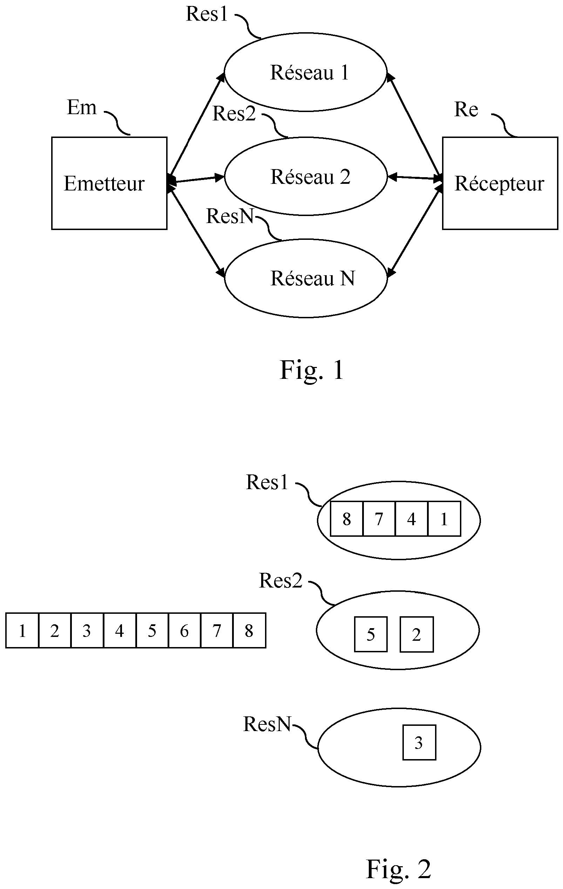

La Fig. 1 illustre schématiquement un exemple d'un système de communication dans lequel la présente invention est implémentée.

Le système de communication comprend un émetteur Em et un récepteur Re reliés entre eux par au moins un réseau de communication Res1. Dans l'exemple de la Fig. 1, l'émetteur Em et le récepteur Re sont reliés par une pluralité de réseaux de communication Res1, Res2 à ResN.

Les réseaux de communication Res1, Res2 à ResN sont par exemple des réseaux de type Ethernet, Wi-Fi, xDSL, (de l'anglais *Digital Subscriber Line*), KA-SAT, BGAN ou cellulaires.

Les données transmises entre l'émetteur Em et le récepteur Re sont des paquets de données d'un flux vidéo.

La transmission de paquets de données vidéo est soumise à des contraintes temporelles de manière à permettre une bonne reproduction de la vidéo au niveau du récepteur. Classiquement, la contrainte temporelle est gérée au niveau de l'émetteur par une fenêtre temporelle (en anglais Timewindow). La fenêtre temporelle correspond au temps devant s'écouler entre l'entrée et la sortie d'un paquet dans le système. Cette contrainte est importante pour plusieurs raisons. La principale est la compensation de la gigue du réseau. La gigue désigne la variation de la latence ou la variation du délai de transfert de l'information. Concrètement, la gigue représente la différence de temps à l'arrivée, entre différents paquets partis en même temps. La gigue apparaît en cas de congestion du réseau, de dérive du timing ou de changement de routage.

La gigue est très variable dans le temps et est fortement dépendante du type de réseau de communication utilisé pour le transfert de paquets de données de l'émetteur vers le récepteur.

Lorsqu'un encodeur vidéo génère des paquets de données, il le fait à un rythme précis correspondant au nombre d'images par seconde de la vidéo. Il est important de pouvoir assurer que les paquets sortent du système au même rythme qu'ils y sont entrés. Le réseau introduit cependant une gigue, faisant varier l'intervalle entre les paquets. Le respect strict de la fenêtre temporelle permet de s'affranchir de la gigue, qui est rendue d'autant plus importante par l'utilisation de différents réseaux.

La Fig. 2 illustre schématiquement un exemple de répartition de paquets de données vidéo entre différents réseaux de communication reliant un émetteur et un récepteur.

Les paquets de données transférés sont répartis sur les différents réseaux de communication Res1 à ResN. Chaque période temporelle correspond à un intervalle de temps configurable, par exemple de 1ms. L'émetteur Em garde en permanence une référence à l'intervalle de temps correspondant au temps courant, appelée now. Les paquets de données sont donc rangés dans l'intervalle de temps correspondant à now + la valeur de la fenêtre temporelle. En effet, cet intervalle de temps correspond au moment à partir duquel le paquet est considéré comme en retard et ne doit donc plus être transmis. Lors de leur entrée dans le système de transmission, un numéro de séquence est attribué à chaque paquet. Un marquage temporel est également apposé à chaque paquet afin de pouvoir déterminer le temps qu'il passe dans le système de transmission.

L'émetteur Em dispose d'une table des liens, chaque lien est représentatif du débit d'un des réseaux de communication. A chaque intervalle de temps, l'émetteur Em parcourt la table des liens. Pour chaque lien, l'émetteur Em détermine la quantité de paquets à envoyer, en fonction de la fréquence d'appel et de la capacité du réseau de communication. Les paquets de données à envoyer sont récupérés dans la ligne de temps en suivant le principe de priorité en fonction de l'échéance de cette dernière, les tâches dont l'échéance est proche recevant la priorité la plus élevée. Les paquets de données sont récupérés en premier dans les intervalles de temps dont l'expiration est la plus proche. Lorsqu'un intervalle de temps est vidé, on passe au suivant jusqu'à épuisement de la capacité du réseau de communication. Les paquets de données sont distribués alternativement sur chaque réseau de communication tant que le débit du réseau de communication le permet. Dans l'exemple de la Fig. 2, le paquet de données 1 est transmis sur le réseau de communication Res1, le paquet de données 2 est transmis sur le réseau de communication Res2, le paquet de données 3 est transmis sur le réseau de communication ResN, le paquet de données 4 est transmis sur le réseau de communication Res1, le paquet de données 5 est transmis sur le réseau de communication Res2, le paquet de données 6 est transmis sur le réseau de communication ResN et, comme la totalité de la bande passante des réseaux de communication Res2 et ResN est atteinte, les paquets de données 7 et 8 sont transmis sur le réseau de communication Res1.

Seuls les paquets de données ayant une chance d'être reçus par le récepteur Re à temps sont transmis. Ceci permet d'éviter un effet "boule de neige", provoquant l'effondrement du système si la quantité de paquets de données à transmettre est supérieure à la capacité des réseaux de communication à disposition. Ayant à sa disposition la capacité de chaque réseau de communication, l'émetteur Em peut déterminer la quantité de données audio/vidéo qu'il peut faire transiter à chaque instant. Cette valeur est mise à disposition du système fournissant la vidéo afin qu'il puisse adapter le débit vidéo aux contraintes réseau d'un instant T.

Les paquets de données transitant sur les différents réseaux de communication présentant des latences différentes, ils n'arrivent pas dans le bon ordre. Un algorithme doit être mis en place afin de pallier ce problème. Cet algorithme doit également être chargé de livrer les paquets de données en respectant les contraintes temporelles. En se basant sur le numéro de séquence apposé à chaque paquet de données par l'émetteur, le récepteur range les paquets dans une table. A chaque paquet est associée une heure de sortie $t_s$, obtenue par la formule suivante :

$$t_s = t_e + \text{timewindow} - \text{clockdiff}$$

$t_e$ correspond à l'heure d'entrée du paquet dans l'émetteur Em et $t_s$ correspond à l'heure de sortie du paquet dans le récepteur Re. A intervalle régulier, le récepteur Re parcourt les paquets présents dans la table, et compare leur heure de sortie théorique à l'heure actuelle. Lorsque les deux correspondent, le paquet de données est transmis.

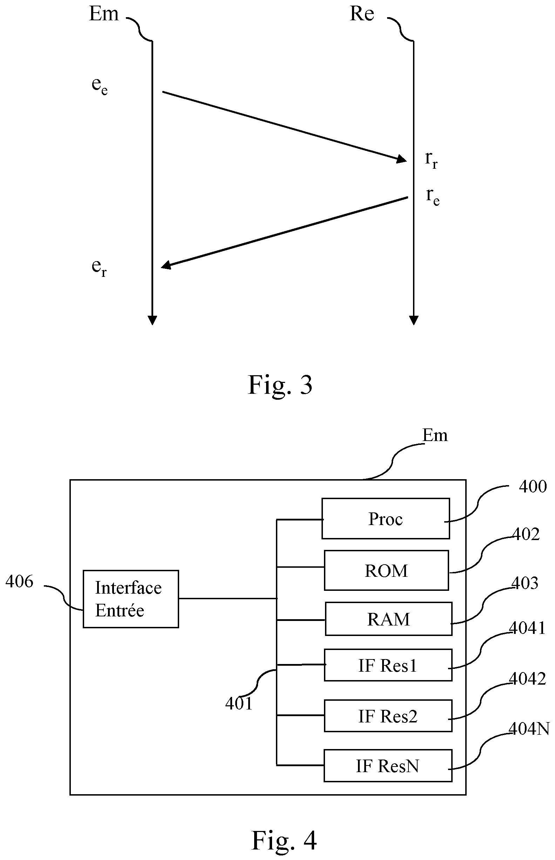

La Fig. 3 illustre un exemple de chronogramme d'envoi de paquets de maintien selon la présente invention.

Afin de pallier les différences d'horloge entre l'émetteur et le récepteur, un mécanisme de synchronisation est mis en place selon la présente invention. Celui-ci permet de déterminer l'écart entre les deux horloges en temps réel, afin de permettre la sortie des paquets en respectant la fenêtre temporelle.

Ce mécanisme repose sur la transmission de paquets de données nommés paquets de maintien (KeepAlive en anglais). Ceux-ci ont, selon la présente invention, une double fonction. La première fonction est de s'assurer que le réseau de communication est toujours opérationnel en envoyant régulièrement des paquets de données. La seconde fonction est la transmission de marqueurs temporels permettant le calcul de l'écart d'horloge entre l'émetteur et le récepteur, appelé ici clockdiff. Les paquets contiennent des marqueurs temporels.

Un premier paquet de maintien est émis par l'émetteur vers le récepteur. Celui-ci contient un marqueur temporel noté ici $e_e$ et qui correspondant à l'instant d'émission dudit paquet. Ce paquet de maintien est ensuite reçu par le récepteur, qui note le temps de réception ($r_r$). Le récepteur répond ensuite par un paquet de maintien, dans lequel il reporte les deux marqueurs temporels $e_e$ et $r_r$ en y ajoutant le marqueur temporel du paquet de maintien noté re. L'émetteur reçoit le paquet de maintien, et mémorise son heure d'arrivée($e_r$). Il dispose ainsi de 4 valeurs, permettant d'établir les calculs suivants :

$$e_{mean} = (e_r - e_e)/2$$

$$r_{mean} = (r_r - r_e)/2$$

$$\text{clockdiff} = e_{mean} - r_{mean}$$

Les valeurs $e_{mean}$ et $r_{mean}$ correspondent au temps de la moitié de la transmission. Classiquement, sur un réseau non saturé, un paquet met autant de temps à parcourir la liaison montante que descendante, ces temps étant en théorie identiques. Tout écart peut être attribué à un écart d'horloge entre l'émetteur et le récepteur. Il peut cependant arriver que les réseaux ne se comportent pas de façon symétrique. Ce calcul est, selon la présente invention, assorti de calculs statistiques afin de filtrer les valeurs de marqueurs temporels aberrantes.

$$rtt_{curr} = (e_r - e_e)$$

$$rtt_{meancurr} = \frac{(\alpha_{quo} - \alpha_s) * rtt_{meanprec} + \alpha_s * rtt_{curr}}{\alpha_{quo}}$$

$$rtt_{dev} = \frac{(\alpha_{quo} - \alpha_d)rtt_{dev} + \alpha_d * (rtt_{curr} - rtt_{meancurr})}{\alpha_{quo}}$$

$$\text{rto} = \text{rtt}_{\text{meancurr}} + 4 * \text{rtt}_{\text{dev}}$$

$\alpha_{\text{quo}}$, $\alpha_s$ et $\alpha_d$ sont trois coefficients permettant de pondérer les valeurs utilisées dans le calcul. Dans une implémentation, les valeurs utilisées sont par exemple $\alpha_{\text{quo}} = 256$, $\alpha_s = 32$ et $\alpha_d = 64$. La variable $\text{rtt}_{\text{meancurr}}$ est une moyenne calculée à l'instant présent et la variable $\text{rtt}_{\text{meanprec}}$ est une moyenne calculée à la précédente itération.

$\text{rtt}_{\text{curr}}$ correspond à la valeur courante du temps de trajet. On calcule sa valeur moyenne pondérée ($\text{rtt}_{\text{meancurr}}$) et la déviation entre le temps de trajet courant et le temps de trajet moyen ($\text{rtt}_{\text{dev}}$). On considère que les valeurs contenues dans un paquet de maintien ne sont pas exploitables dès lors que le $\text{rtt}_{\text{cur}}$ dépasse la valeur de $r_{\text{to}}$, c'est-à-dire que son écart par rapport à la moyenne est 4 fois supérieur.

Ce mécanisme permet d'éviter des erreurs de calculs de différences d'horloges clockdiff dans des mauvaises conditions réseau. L'émetteur peut ainsi filtrer efficacement les paquets de maintien non utilisables, et obtenir une mesure plus fiable. La différence d'horloges clockdiff pouvant varier au cours du temps du fait d'une éventuelle dérive d'horloge entre l'émetteur et le récepteur, il est important d'effectuer ces échanges et calculs régulièrement tout au long de la transmission vidéo, par exemple tous les 50 ms. La Fig. 4 illustre un exemple d'architecture d'un émetteur selon un mode de réalisation Selon l'exemple d'architecture matérielle représenté à la Fig. 4, l'émetteur Em comprend, reliés par un bus de communication 401 : un processeur Proc 400 ; une mémoire vive RAM (« Random Access Memory » en anglais) 403 ; une mémoire morte ROM (« Read Only Memory » en anglais) 402 ; N interfaces réseau IF Res1 4041, IF Res2 4042 à IF ResN 404N permettant à l'émetteur de communiquer avec le récepteur Re et une interface d'entrée 406 recevant le flux de données à transmettre.

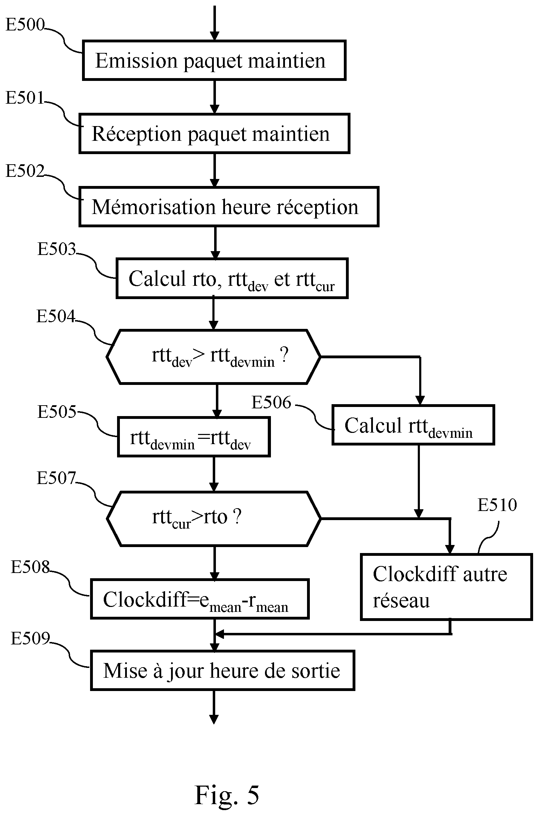

Le processeur 400 est capable d'exécuter des instructions chargées dans la RAM 403 à partir de la ROM 402, d'une mémoire externe (non représentée), d'un support de stockage (tel qu'une carte SD), ou d'un réseau de communication. Lorsque l'émetteur Em est mis sous tension, le processeur 400 est capable de lire de la RAM 403 des instructions et de les exécuter. Ces instructions forment un programme d'ordinateur causant la mise en oeuvre, par le processeur 400, de tout ou partie du procédé décrit en relation avec la Fig. 5.

Le procédé décrit ci-après en relation avec la Fig. 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'émetteur Em comprend de la circuiterie électronique configurée pour mettre en oeuvre le procédé décrit en relation avec la Fig. 5.

La Fig.5 illustre un exemple d'un procédé exécuté par un émetteur selon un mode de réalisation.

Le présent algorithme est exécuté périodiquement, par exemple avec une périodicité de l'ordre de la milliseconde et pour chaque réseau de communication Res1, Res2 à ResN.

A l'étape E500, l'émetteur Em commande l'émission d'un paquet de maintien. Le paquet de maintien comporte un marqueur temporel $e_e$ qui correspond à l'instant d'émission dudit paquet.

A l'étape E501, l'émetteur Em reçoit du récepteur Re un paquet de maintien qui comporte les deux marqueurs temporels $e_e$ et $r_r$ et le marqueur temporel du paquet de maintien noté $r_e$ reçu de l'émetteur Em.

A l'étape E502, l'émetteur Em mémorise son heure d'arrivée($_{er}$).

A l'étape E503, l'émetteur Em effectue les calculs suivants :

$$e_{\text{mean}} = (e_r - e_e)/2$$

$$r_{\text{mean}} = (r_r - \text{re})/2$$

$$\text{rtt}_{\text{curr}} = (e_r - e_e)$$

$$rtt_{meancurr} = \frac{(\alpha_{quo} - \alpha_s) * rtt_{meanprec} + \alpha_s * rtt_{curr}}{\alpha_{quo}}$$

$$rtt_{dev} = \frac{(\alpha_{quo} - \alpha_d)rtt_{dev} + \alpha_d * (rtt_{curr} - rtt_{meancurr})}{\alpha_{quo}}$$

$$\text{rto} = \text{rtt}_{\text{mean}} + 4 * \text{rtt}_{\text{dev}}$$

A l'étape E504, l'émetteur Em vérifie si la valeur de $rtt_{dev}$ calculée est supérieure à une valeur $rtt_{devmin}$.

Dans l'affirmative, l'émetteur Em passe à l'étape E506. Dans la négative, l'émetteur Em passe à l'étape E505.

A l'étape E506, l'émetteur calcule une nouvelle valeur de $rtt_{devmin}$ selon la formule suivante :

$$rtt_{dev\_min} = rtt_{dev\_min} + \min(1000, rtt_{dev}*0.02)$$

De cette façon, le $rtt_{dev\_min}$ est augmenté de 2% de la valeur de $rtt_{dev}$ actuelle, avec un maximum de 1ms. Cette augmentation permet de calculer le minimum local de $rtt_{dev}$ plutôt que son minimum global. Ce faisant, les augmentations de latences provoquées par un changement de condition réseau et non par de la congestion sont prises en compte et ne provoquent pas un blocage du système.

Cette opération effectuée, l'émetteur Em interrompt le présent algorithme lorsqu'un seul réseau de communication est utilisé ou prend à l'étape E510 la valeur du clockdiff calculée pour un autre des réseaux de communication lorsque plusieurs réseaux de communication sont utilisés.

A l'étape E505, l'émetteur Em met la valeur de $rtt_{devmin}$ égale à $rtt_{dev}$.

A l'étape suivante E507, l'émetteur Em vérifie si la valeur de $rtt_{cur}$ est supérieure à la valeur de rto. Dans l'affirmative, l'émetteur Em interrompt le présent algorithme lorsqu'un seul réseau de communication est utilisé ou prend à l'étape E5 10 la valeur du clockdiff calculée pour un autre des réseaux de communication lorsque plusieurs réseaux de communication sont utilisés.

Dans la négative, l'émetteur EM passe à l'étape E508 et calcule une nouvelle valeur de clockdiff selon la formule suivante :

$$Clockdiff = e_{mean} - r_{mean}.$$

A l'étape E51 0, l'émetteur Em met à jour chaque heure de sortie des paquets avec $t_s = t_e$ + timewindow - clockdiff.

## Revendications

**1.** Procédé de mise à jour d'une heure de sortie d'au moins un paquet de données d'un flux audiovisuel transféré d'un émetteur vers un récepteur par l'intermédiaire d'au moins un réseau de communication, **caractérisé en ce que** le procédé comporte les étapes effectuées par l'émetteur de :

- transfert (E500) d'un premier paquet de données comportant un premier marqueur temporel correspondant à l'instant d'émission du premier paquet,
- réception (E501) d'un second paquet de données comportant le premier marqueur temporel, un second marqueur temporel correspondant à l'heure de réception du premier paquet et un troisième marqueur temporel correspondant à l'instant d'émission du second paquet,
- mémorisation (E502) de l'heure de réception du second paquet,
- calcul (E503), à partir des trois marqueurs temporels et de l'heure de réception du second paquet, d'un temps de trajet moyen,
- calcul (E503) d'une valeur moyenne pondérée et d'une déviation entre le temps de trajet courant et le temps de trajet moyen, la valeur moyenne pondérée et la déviation entre le temps de trajet courant et le temps de trajet moyen sont calculées à partir des formules suivantes :

$$rtt_{curr} = (e_r - e_e)$$

où $e_e$ est le premier marqueur temporel et $e_r$ est l'heure de réception du second paquet,

$$rtt_{meancurr} = \frac{(\alpha_{quo} - \alpha_s) * rtt_{meanprec} + \alpha_s * rtt_{curr}}{\alpha_{quo}}$$

$$rtt_{dev} = \frac{(\alpha_{quo} - \alpha_d)rtt_{dev} + \alpha_d * (rtt_{curr} - rtt_{meancurr})}{\alpha_{quo}}$$

où $\alpha_{quo}$, $\alpha_s$ et $\alpha_d$ sont trois coefficients permettant de pondérer les valeurs utilisées dans le calcul, $rtt_{meancurr}$ est la moyenne calculée à l'instant présent, la variable rtt$_{meanprec}$ est la moyenne calculée à la précédente itération et rtt$_{curr}$ correspond à la valeur courante du temps de trajet,

- vérification (E507) si le temps de trajet moyen est supérieur à un seuil prédéterminé, le seuil prédéterminé étant fonction de la valeur moyenne pondérée et de la déviation entre le temps de trajet courant et le temps de trajet moyen,
- prise (E508) en compte du temps de trajet moyen pour mettre à jour l'heure de sortie d'au moins un paquet de données du flux audiovisuel si au moins le temps de trajet moyen est inférieur ou égal au seuil prédéterminé,
- non (E510) prise en compte du temps de trajet moyen pour mettre à jour l'heure de sortie d'au moins un paquet de données du flux audiovisuel si le temps de trajet moyen est supérieur au seuil prédéterminé.

2. Procédé selon la revendication 1, **caractérisé en ce que** la prise en compte du temps de trajet moyen pour mettre à jour l'heure de sortie d'au moins un paquet de données du flux audiovisuel est en outre dépendante d'une comparaison de la déviation entre le temps de trajet courant et le temps de trajet moyen avec un temps minimum.

3. Procédé selon la revendication 1 ou 2, **caractérisé en ce que** les paquets de données du flux audiovisuel sont transférés de l'émetteur vers le récepteur par l'intermédiaire d'une pluralité de réseaux de communication et **en ce que** le procédé est effectué pour chaque réseau de communication.

4. Procédé selon la revendication 3, **caractérisé en ce que** si le temps de trajet moyen est supérieur au seuil prédéterminé, la mise à jour de l'heure de sortie du au moins un paquet est effectuée à partir du temps de trajet moyen d'un autre réseau de communication.

5. Procédé selon l'une quelconque des revendications 2 à 4, **caractérisé en ce que** les réseaux de communication sont des réseaux de type Ethernet, Wi-Fi, xDSL, KA-SAT, BGAN ou cellulaires.

6. Dispositif de mise à jour d'une heure de sortie d'au moins un paquet de données d'un flux audiovisuel transféré d'un émetteur vers un récepteur par l'intermédiaire d'au moins un réseau de communication, **caractérisé en ce que** le dispositif est compris dans l'émetteur et comporte :

- des moyens de transfert d'un premier paquet de données comportant un premier marqueur temporel correspondant à l'instant d'émission du premier paquet,
- des moyens de réception d'un second paquet de données comportant le premier marqueur temporel, un second marqueur temporel correspondant à l'heure de réception du premier paquet et un troisième marqueur temporel correspondant à l'instant d'émission du second paquet,
- des moyens de mémorisation de l'heure de réception du second paquet,
- des moyens de calcul, à partir des trois marqueurs temporels et de l'heure de réception du second paquet, d'un temps de trajet moyen,
- des moyens de calcul d'une valeur moyenne pondérée et d'une déviation entre le temps de trajet courant et le temps de trajet moyen, la valeur moyenne pondérée et la déviation entre le temps de trajet courant et le temps de trajet moyen sont calculées à partir des formules suivantes :

$$rtt_{curr} = (e_r - e_e)$$

où $e_e$ est le premier marqueur temporel et $e_r$ est l'heure de réception du second paquet,

$$rtt_{meancurr} = \frac{(\alpha_{quo} - \alpha_s) * rtt_{meanprec} + \alpha_s * rtt_{curr}}{\alpha_{quo}}$$

$$rtt_{dev} = \frac{(\alpha_{quo} - \alpha_d)rtt_{dev} + \alpha_d * (rtt_{curr} - rtt_{meancurr})}{\alpha_{quo}}$$

ou $\alpha_{quo}$, $\alpha_s$ et $\alpha_d$ sont trois coefficients permettant de pondérer les valeurs utilisées dans le calcul, rtt$_{meancurr}$ est la moyenne calculée à l'instant présent, la variable rtt$_{meanprec}$ est la moyenne calculée à la précédente itération et rtt$_{curr}$ correspond à la valeur courante du temps de trajet,
- des moyens de vérification si le temps de trajet moyen est supérieur à un seuil prédéterminé, le seuil prédéterminé étant fonction de la valeur moyenne pondérée et de la déviation entre le temps de trajet courant et le temps de trajet moyen,
- des moyens de prise en compte du temps de trajet moyen pour mettre à jour l'heure de sortie d'au moins un paquet de données du flux audiovisuel si au moins le temps de trajet moyen est inférieur ou égal au seuil prédéterminé,
- des moyens de non prise en compte du temps de trajet moyen pour mettre à jour l'heure de sortie d'au moins un paquet de données du flux audiovisuel si le temps de trajet moyen est supérieur au seuil prédéterminé.

7. Un produit programme d'ordinateur **caractérisé en ce qu'**il comprend des instructions pour implémenter, par un équipement, le procédé selon l'une quelconque des revendications 1 à 6, lorsque ledit programme est exécuté par un processeur d'un noeud.

8. Un support de stockage **caractérisé en ce qu'**il stocke un programme d'ordinateur comprenant des instructions pour implémenter, par un équipement, le procédé selon l'une quelconque des revendications 1 à 6, lorsque ledit programme est exécuté par un processeur d'un noeud.

Fig. 1

Fig. 2

Em

Re

$e_e$

$r_r$

$r_e$

$e_r$

## Fig. 3

Em

Proc — 400

ROM — 402

RAM — 403

IF Res1 — 4041

IF Res2 — 4042

IF ResN — 404N

406 — Interface Entrée

401

## Fig. 4

E500 — Emission paquet maintien

E501 — Réception paquet maintien

E502 — Mémorisation heure réception

E503 — Calcul rto, $rtt_{dev}$ et $rtt_{cur}$

E504 — $rtt_{dev} > rtt_{devmin}$ ?

E505 — $rtt_{devmin} = rtt_{dev}$

E506 — Calcul $rtt_{devmin}$

E507 — $rtt_{cur} > rto$ ?

E508 — Clockdiff=$e_{mean}$-$r_{mean}$

E510 — Clockdiff autre réseau

E509 — Mise à jour heure de sortie

Fig. 5

Europäisches Patentamt
European Patent Office
Office européen des brevets

**RAPPORT DE RECHERCHE EUROPEENNE**

Numéro de la demande

EP 24 22 1362

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2013/336498 A1 (HAATAINEN NIKO [FI]) 19 décembre 2013 (2013-12-19) * alinéa [0069] * * alinéa [0076] - alinéa [0084] * * alinéa [0092] - alinéa [0097] * * figures 1-7 * ----- | 1-8 | INV. H04N21/242 H04L69/28 H04N21/43 H04N21/61 H04N21/8547 |
| Y | US 2012/320794 A1 (BELHADJ MED [CA] ET AL) 20 décembre 2012 (2012-12-20) * alinéa [0057] * * alinéa [0072] * * alinéa [0080] - alinéa [0088] * * alinéa [0149] - alinéa [0152] * * alinéa [0160] - alinéa [0161] * * alinéa [0167] - alinéa [0168] * * figures 2-3, 11-14 * ----- | 1-8 | ADD. H04L47/283 H04N21/44 H04N21/462 |
| Y | US 2018/048409 A1 (MIZRAHI TAL [IL]) 15 février 2018 (2018-02-15) * alinéa [0044] - alinéa [0049] * ----- | 4 | |
| A | FR 2 895 181 A1 (MEDIATVCOM SARL [FR]) 22 juin 2007 (2007-06-22) * abrégé * ----- | 3 | DOMAINES TECHNIQUES RECHERCHES (IPC) H04N H04L |

Le présent rapport a été établi pour toutes les revendications

| Lieu de la recherche | Date d'achèvement de la recherche | Examinateur |
|---|---|---|
| La Haye | 20 février 2025 | Lefol, Damien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 1362

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2025

| Document brevet cité au rapport de recherche | Date de publication | Membre(s) de la famille de brevet(s) | Date de publication |
|---|---|---|---|
| US 2013336498 A1 | 19-12-2013 | CN 102027699 A | 20-04-2011 |
| | | EP 2253087 A1 | 24-11-2010 |
| | | ES 2435553 T3 | 20-12-2013 |
| | | JP 5574988 B2 | 20-08-2014 |
| | | JP 2011517165 A | 26-05-2011 |
| | | US 2011015769 A1 | 20-01-2011 |
| | | US 2013336498 A1 | 19-12-2013 |
| | | WO 2009112070 A1 | 17-09-2009 |
| US 2012320794 A1 | 20-12-2012 | US 2010085989 A1 | 08-04-2010 |
| | | US 2012320794 A1 | 20-12-2012 |
| US 2018048409 A1 | 15-02-2018 | US 2013259049 A1 | 03-10-2013 |
| | | US 2018048409 A1 | 15-02-2018 |
| FR 2895181 A1 | 22-06-2007 | EP 1961165 A2 | 27-08-2008 |
| | | FR 2895181 A1 | 22-06-2007 |
| | | US 2008267216 A1 | 30-10-2008 |
| | | WO 2007080284 A2 | 19-07-2007 |

EPO FORM P0460

Pour tout renseignement concernant cette annexe : voir Journal Officiel de l'Office européen des brevets, No.12/82